# EUROPÄISCHE PATENTSCHRIFT

(11) **EP 3 695 105 B1**
(45) Veröffentlichungstag und Bekanntmachung des Hinweises auf die Patenterteilung: **14.07.2021**
(21) Anmeldenummer: 18779580.2
(22) Anmeldetag: 19.09.2018
(51) Int. Cl.: F01N 9/00, F01N 13/00, F01N 3/027, F01N 3/20, F01N 3/28, F01N 11/00, G01K 7/16

(54) **VORRICHTUNG UND VERFAHREN ZUM ERMITTELN EINER HEIZTEMPERATUR EINES HEIZELEMENTS FÜR EINEN ELEKTRISCH BEHEIZBAREN KATALYSATOR UND KRAFTFAHRZEUG**
DEVICE AND METHOD FOR DETERMINING A HEATING TEMPERATURE OF A HEATING ELEMENT FOR AN ELECTRICALLY HEATABLE CATALYTIC CONVERTER, AND MOTOR VEHICLE
DISPOSITIF ET PROCÉDÉ DE DÉTERMINATION DE LA TEMPÉRATURE DE CHAUFFAGE D'UN ÉLÉMENT CHAUFFANT POUR UN CATALYSEUR CHAUFFABLE ÉLECTRIQUEMENT ET VÉHICULE AUTOMOBILE

(30) Priorität: 13.10.2017 DE 102017218374
(43) Veröffentlichungstag der Anmeldung: 19.08.2020
(73) Patentinhaber: Vitesco Technologies GmbH, 30165 Hannover (DE)
(72) Erfinder: WEIGL, Manfred, 81737 München (DE); HAFT, Gerhard, 81737 München (DE)
(86) Internationale Anmeldenummer: PCT/EP2018/075290
(87) Internationale Veröffentlichungsnummer: WO 2019/072503

(56) Entgegenhaltungen:
- EP-A1- 2 546 487
- WO-A1-2008/147068
- US-A1- 2007 266 701
- US-A1- 2010 089 042
- US-A1- 2010 319 315
- US-A1- 2010 326 403
- US-A1- 2011 258 992
- US-A1- 2012 255 285

## Beschreibung

Die Erfindung betrifft eine Vorrichtung und ein Verfahren zum Ermitteln einer Heiztemperatur eines Heizelements für einen elektrisch beheizbaren Katalysator, die jeweils zu einem zuverlässigen und schadstoffarmen Betrieb des Kraftfahrzeugs beitragen können. Außerdem betrifft die Erfindung ein Kraftfahrzeug mit einer solchen Vorrichtung.

Kraftfahrzeuge mit Verbrennungsmotoren weisen Katalysatoren auf, die der Abgasnachbehandlung dienen (siehe Dokument US 2012/255285 A1). Mittels eines Katalysators können die Schadstoffemissionen im Abgas reduziert werden. Manche Kraftfahrzeuge weisen elektrisch beheizbare Katalysatoren auf, um mittels eines Heizelements eine nutzbringende Betriebstemperatur des Katalysators zeitnah einstellen zu können. Mit Kenntnis der Temperatur des Heizelements kann eine gewünschte Betriebstemperatur des Katalysators eingestellt werden. Allerdings basiert eine solche Funktion des elektrischen Katalysatorheizens auf einem Auswerten von erwärmten Abgasströmungen und erfolgt daher erst nach einem gewissen Vorlauf bei laufendem Verbrennungsmotor.

Es ist eine Aufgabe, die der Erfindung zugrunde liegt, eine Vorrichtung und ein Verfahren zum Ermitteln einer Heiztemperatur eines Heizelements für einen elektrisch beheizbaren Katalysator zu schaffen, die jeweils zu einem zuverlässigen und schadstoffarmen Betrieb eines Kraftfahrzeugs beitragen können.

Die Aufgabe wird durch die Merkmale der unabhängigen Patentansprüche gelöst. Vorteilhafte Ausgestaltungen der Erfindung sind in den Unteransprüchen angegeben.

Gemäß einem Aspekt der Erfindung umfasst eine Vorrichtung zum Ermitteln einer Heiztemperatur eines Heizelements für einen elektrisch beheizbaren Katalysator das Heizelement und den Katalysator, die innerhalb eines Katalysatorgehäuses angeordnet sind, und einen ersten Temperatursensor und einen zweiten Temperatursensor, die bezogen auf eine Abgasströmungsrichtung innerhalb des Katalysatorgehäuses stromaufwärts vor dem Heizelement angeordnet sind, wobei der erste Temperatursensor bezogen auf die Abgasströmungsrichtung innerhalb des Katalysatorgehäuses näher an dem Heizelement angeordnet ist als der zweite Temperatursensor.

Mittels der beschriebenen Vorrichtung ist eine Heiztemperatur eines Heizelements für einen Katalysator zuverlässig ermittelbar und es kann dazu beigetragen werden, Schadstoffemissionen während eines Betriebs eines Kraftfahrzeugs gering zu halten.

Bei elektrisch beheizbaren Katalysatoren ist es vorteilhaft, wenn das Heizelement schon vor einem Motorstart eines Verbrennungsmotors des Kraftfahrzeugs aktiviert wird, um dem Katalysator bei Motorstart schneller Wärme zuführen zu können und eine zur Abgasnachbehandlung nutzbringende Betriebstemperatur einzustellen. Mit einem üblichen Abgastemperatursensor besteht unter anderem das Problem, dass die Temperatur des Heizelementes bei stehendem beziehungsweise nicht betriebenen Motor nicht überwacht werden kann, da die Temperatur des Heizelements bei laufendem Motor anhand des durch das Katalysatorgehäuse durchströmenden Gases erfasst beziehungsweise abschätzt wird. Ohne Gasströmung kann das Heizelement gemäß einem solchen Aufbau eines Katalysatorsystems schnell überhitzen und beschädigt werden.

Mittels der beschriebenen Vorrichtung ist auf einfache und zuverlässige Weise ein Erfassen und Begrenzen der Temperatur des Heizelementes durchführbar und es kann ein vorteilhafter Betriebszustand des Katalysatorsystems eingestellt werden, in welchem der beheizbare Katalysatoren schon vor einem Motorstart des Verbrennungsmotors des Kraftfahrzeugs aktiviert werden kann, um zu einem verringerten Schadstoffausstoß beizutragen. Die Funktion des elektrischen Katalysatorheizens kann somit auch bei stehendem beziehungsweise nicht betriebenem Motor genutzt werden. Auch eine relativ hohe Heizleistung und ein entsprechend schneller Temperaturanstieg sind mittels der beschriebenen Vorrichtung sicher einleitbar.

Gemäß einer bevorzugten Weiterbildung umfasst die Vorrichtung eine Abschirmung, die innerhalb des Katalysatorgehäuses bezogen auf die Abgasströmungsrichtung zwischen dem ersten und dem zweite Temperatursensor angeordnet ist, sodass der zweite Temperatursensor von einer Wärmestrahlung des Heizelements abgeschirmt ist.

Die Abschirmung weist zum Beispiel zwei Bleche auf, die sich zwischen den beiden Temperatursensoren erstrecken. Die Bleche können gerade oder planar ausgebildet sein oder eine vorgegebene Biegung aufweisen, die eine nutzbringende Abschirmung des zweiten, referenzierenden Temperatursensors ausbildet. Außerdem kann die Abschirmung auch lediglich ein Abschirmelement oder mehr als zwei Abschirmelemente aufweisen, die als Bleche, Keramik oder anderweitig ausgebildet sind, um hinsichtlich der Wärmestrahlung des Heizelements einen Schatten für den zweiten Temperatursensor auszubilden.

Gemäß einer weiteren bevorzugten Weiterbildung umfasst die Vorrichtung eine Sensorschnittstelle, die an dem Katalysatorgehäuse angeordnet und zur mechanischen Aufnahme des ersten und/oder des zweiten Temperatursensors ausgebildet ist. Eine solche Schnittstelle ermöglicht einen einfach Einbau der Temperatursensoren sowie einen stabilen und sicheren Halt der Temperatursensoren an einer vordefinierten Position. Insbesondere kann die Sensorschnittstelle als Gewindeöffnung realisiert sein, in welche die Temperatursensoren mit entsprechenden Haltemitteln eingeschraubt werden können.

Auch kann die Sensorschnittstelle eine Aufnahmeöffnung umfassen, welche bei einem vorhandenen Katalysatorsystem bereits ausgebildet ist, sodass eine vorhandene Aufnahmeöffnung zusätzlich dazu genutzt wird, einen weiteren, referenzierenden Temperatursensor und gegebenenfalls auch eine vorgesehene Abschirmung mit aufzunehmen. Somit kann mit besonders geringem Aufwand ein bestehendes Katalysatorsystem mit Komponenten ergänzt werden, sodass ein besonders zuverlässiges Ermitteln einer Heiztemperatur des Heizelements gemäß der beschriebenen Anordnung realisierbar ist.

Insbesondere können der erste und der zweite Temperatursensor gemäß einer bevorzugten Weiterbildung der Vorrichtung als eine gemeinsame Sensorbaugruppe ausgebildet sein. Sofern eine Abschirmung vorgesehen ist, kann diese ebenfalls einen Teil einer gemeinsamen Sensorbaugruppe ausbilden. Auf diese Weise ist eine besonders einfache Montage und Wartung der beschriebenen Vorrichtung möglich, indem die Sensorbaugruppe zum Beispiel verschraubbar oder einrastbar in die Sensorschnittstelle eingebracht wird und bei Bedarf entsprechend einfach aus dieser wieder ausgebaut werden kann.

Alternativ zu einer gemeinsamen Sensorbaugruppe, in welcher die beiden Temperatursensoren nah beieinander integriert sind, können die Temperatursensoren separat in dem Katalysatorgehäuse verbaut sein. Je nach Einbauort kann dann auch eine Abschirmung der Wärmestrahlung zwischen den beiden Temperatursensoren entfallen. Zum Beispiel kann der erste Temperatursensor einen Abstand von 50 Millimetern zu dem Heizelement aufweisen, während der zweite Temperatursensor 15-20 Zentimeter von dem ersten Temperatursensor entfernt angeordnet ist, sodass eine ausreichende Temperaturdifferenz bestimmbar ist, die ein zuverlässiges und präzises Ermitteln der Heiztemperatur des Heizelements ermöglicht.

Auf diese Weise kann mittels des ersten Temperatursensors eine erhöhte Temperatur im Bereich der Wärmestrahlung des Heizelements erfasst werden, während mittels des zweiten Temperatursensors mit ausreichendem Abstand von dem Heizelement eine Umgebungstemperatur messbar ist, die der Referenz dient und sich von der ersten Temperatur unterscheidet. Außerdem ist es auch unter Umständen möglich, die Abgastemperatur und damit die Heiztemperatur des Heizelements ausreichend genau mittels Modellrechnungen zu bestimmen, sodass der zweite Temperatursensor als Referenzsensor entfallen kann.

Der erste und/oder der zweite Temperatursensor ist zum Beispiel jeweils als Abgastemperatursensor ausgebildet und weist einen Thermistor und/oder ein Thermoelement auf, mittels dessen eine jeweilige Temperatur in dem Abgasstrang des Katalysatorgehäuses messbar ist.

Ein Einsatz von üblichen thermoelektrischen Sensoren in Pyrometern zur berührungslosen Temperaturmessung ist in Abgassystemen von Verbrennungsmotoren aufgrund der hohen mechanischen, thermischen und chemischen Anforderungen in der Regel nicht nutzbringend. Die Temperatur des Heizelements kann mittels geeigneter Temperatursensoren erfasst werden, indem die Erwärmung des jeweiligen Temperatursensors über die Strahlungsleistung der Oberfläche des Heizelementes ausgewertet wird.

Die Strahlungsleistung ist ein Maß an abgestrahlter Wärmemenge pro Zeiteinheit und steigt in dem für das Heizelement relevanten Temperaturbereich mit der vierten Potenz der Temperatur der Oberfläche an. Da für die Überwachung des Heizelementes im Wesentlichen relativ hohe Temperaturen im Bereich von 600°C bis 1000°C erfasst werden sollen und diese Temperaturen im Heizbetrieb üblicherweise über der momentanen Abgastemperatur liegen, kann dies mit konventionellen Abgastemperatursensoren erfolgen. Ein Abgastemperatursensor wird als erster Temperatursensor so montiert, dass er von der Strahlungsleistung des Heizelementes erwärmt wird.

Der zweite Temperatursensor wird als Referenzsensor so hinter dem ersten Temperatursensor angeordnet, dass die Wärmestrahlung des Heizelementes diesen nicht oder signifikant geringer beeinflusst. Vorzugsweise ist der zweite Temperatursensor mittels geeignet geformter Abschirmbleche von der Wärmestrahlung abgeschattet, sodass dieser zweite Temperatursensor im Wesentlichen nur die Umgebungstemperatur innerhalb des Katalysatorsystems erfasst.

Abhängig von der momentanen Temperatur des ersten Temperatursensors und seiner Umgebungstemperatur, steigt die Temperatur des ersten Temperatursensors an, sobald das Heizelement aktiv ist und den Katalysator beheizt. Bei den relevanten hohen Temperaturen ist die Strahlungsleistung des Heizelementes groß genug, sodass trotz metallischer Oberflächen, welche einen relativ niedrigen Emissions- beziehungsweise Absorptionskoeffizienten aufweisen, von Strahler und Absorber eine ausreichende Strahlungsleistung für einen hinreichenden Messeffekt auf den Temperatursensor wirkt. Vorliegend realisiert das Heizelement den Strahler und der erste Temperatursensor einen Absorber.

Der zeitliche Gradient der Differenztemperatur zwischen dem ersten Temperatursensor und dem referenzierenden zweiten Temperatursensorelement bildet ein Maß für die Temperatur der Oberfläche des Heizelements. Da auch die Temperatur des Absorbers beziehungsweise des ersten Temperatursensors die Aufnahme und Übertragung von Strahlungsenergie bestimmt, wird der Gradient der Differenztemperatur mit der Referenztemperatur gewichtet, die mittels des zweiten Temperatursensors bestimmbar ist. Steigt zum Beispiel während der Messung die Abgastemperatur an, wird dies ebenfalls mittels des zweiten Temperatursensors erfasst und kann zur Korrektur des gemessenen Gradienten der Differenztemperatur berücksichtigt werden.

Eine Temperaturverteilung über der Fläche des Heizelements ist nicht vollständig homogen und es bilden sich aufgrund der Physik der Wärmestrahlung heiße Bereiche aus, die sich überproportional auf die Strahlungsleistung auswirken, da diese pro Fläche mit der vierten Potenz der Temperatur ansteigt. Die Kenntnis dieser Eigenschaft ist zum Ausbilden eines Überhitzungsschutzes für das Heizelement von wesentlicher Bedeutung, da nicht die durchschnittliche Temperatur sondern die heißesten Stellen des Heizelements für die Strahlungsleistung entscheidend sind.

Mittels der beschriebenen Vorrichtung ist die Oberflächentemperatur des Heizelementes indirekt über die thermische Strahlungsleistung ermittelbar und es kann ein Beitrag zu einer langlebigen und zuverlässigen Funktionalität des Heizelements geleistet werden. Dabei ist zum Beispiel kein empfindlicher Infrarotsensor auf Halbleiterbasis erforderlich, sondern es kann das Funktionsprinzip von robusten Abgastemperatursensoren verwendet werden.

Insbesondere ist es nutzbringend, dass relativ hohe Temperaturen gemessen werden, bei denen die Strahlungsleistungen hoch sind, um ein zuverlässiges Ermitteln der Heiztemperatur des Heizelements zu ermöglichen. Durch die Verwendung von zwei Temperatursensorelementen, von denen eines direkt im Strahlungsbereich des Heizelements angeordnet ist, und das zweite Temperatursensorelement zum Ermitteln der lokalen Umgebungstemperatur beabstandet und/oder abgeschirmt von dem ersten Temperatursensor positioniert ist, kann die Temperatur des Heizelementes präzise auch bei Abwesenheit einer Abgasströmung ermittelt werden.

Mittels der Vorrichtung ist somit ein Sensorsystem mit einem beheizbaren Katalysator ausbildbar, dessen benötigten Komponenten insbesondere mittels verfügbarer Technologien realisierbar sind. Solche Komponenten haben sich in der Anwendung im Abgas bereits bewährt. Zudem kann der als Referenzsensor dienende zweite Temperatursensor zusammen mit dem ersten Temperatursensor in einer gemeinsamen Sensorbaugruppe vorgesehen werden, sodass lediglich ein zusätzlicher Temperatursensor an einer ohnehin vorgesehenen Position für die Sensorbaugruppe im Katalysatorgehäuse angeordnet wird. Daher fällt kein zusätzlicher Aufwand für die Montage der Sensorbaugruppe an und die beschriebene Vorrichtung kann besonders kostengünstig angefertigt und in bestehende Katalysatorsysteme integriert werden.

Ein weiterer Aspekt der Erfindung betrifft ein Kraftfahrzeug, welches eine Ausgestaltung der zuvor beschriebenen Vorrichtung zum Ermitteln einer Heiztemperatur eines Heizelements für einen elektrisch beheizbaren Katalysator umfasst. Die Vorrichtung ist dabei in oder an dem Kraftfahrzeug angeordnet.

Da das Kraftfahrzeug eine Ausführungsform der zuvor beschriebenen Vorrichtung aufweist, sind, sofern zutreffend, Eigenschaften und Merkmale, die auch für das Kraftfahrzeug offenbart und umgekehrt.

Gemäß einem weiteren Aspekt der Erfindung umfasst ein Verfahren zum Ermitteln einer Heiztemperatur eines Heizelements für einen elektrisch beheizbaren Katalysator ein Ansteuern des Heizelements zum Beheizen des Katalysators und ein Empfangen eines ersten Temperaturmesssignals mittels eines ersten Temperatursensors, das repräsentativ für eine erste Temperatur innerhalb eines Katalysatorgehäuses ist. Das Verfahren umfasst weiter Empfangen eines zweiten Temperaturmesssignals mittels eines zweiten Temperatursensors, das repräsentativ für eine zweite Temperatur innerhalb des Katalysatorgehäuses ist. Ferner umfasst das Verfahren ein Ermitteln eines zeitlichen Temperaturgradienten in Abhängigkeit von dem ersten und zweiten Temperaturmesssignals, und ein Ermitteln einer Heiztemperatur des Heizelements in Abhängigkeit von dem ermittelten zeitlichen Temperaturgradienten.

Mittels des beschriebenen Verfahrens ist eine Heiztemperatur eines Heizelements für einen Katalysator zuverlässig ermittelbar und es kann dazu beigetragen werden, Schadstoffemissionen während eines Betriebs eines Kraftfahrzeugs gering zu halten. Insbesondere ist das Verfahren mittels einer Ausführungsform der zuvor beschriebenen Vorrichtung durchführbar, sodass, sofern zutreffend, Eigenschaften und Merkmale, die zuvor im Zusammenhang mit der Vorrichtung zum Ermitteln einer Heiztemperatur des Heizelements für einen Katalysator beschrieben wurden, auch für das Verfahren offenbart sind und umgekehrt.

Gemäß einer bevorzugten Weiterbildung des Verfahrens wird das Ermitteln einer Heiztemperatur des Heizelements in Abhängigkeit von bereitgestellten Daten durchgeführt, die systemspezifische Informationen über die Vorrichtung umfassen, mittels derer das Verfahren durchführbar ist. Solche systemspezifischen Informationen können zum Beispiel Daten einer Modellrechnung umfassen, anhand derer eine Abgastemperatur ausreichend genau bestimmbar ist. Alternativ oder zusätzlich umfassen die bereitgestellten Daten Informationen von empirisch ermittelten systemspezifischen Kennfeldern, die zum Beispiel in Abhängigkeit von thermischen und geometrischen Randbedingungen des Katalysatorsystems generiert wurden. Unter Berücksichtigung der komplexen Strahlungseigenschaften in einem Katalysatorsystem ist im Rahmen des Verfahrens zum Ermitteln einer Heiztemperatur des Heizelements für einen elektrisch beheizbaren Katalysator eine Kombination von kalibrierten Kennfeldern und auf Modellrechnung basierten Daten vorteilhaft.

Ausführungsbeispiele der Erfindung sind im Folgenden anhand der schematischen Zeichnungen näher erläutert. Es zeigen:
- Figur 1: ein schematisches Ausführungsbeispiel eines Kraftfahrzeugs,
- Figur 2: ein schematisches Ausführungsbeispiel einer Vorrichtung zum Ermitteln einer Heiztemperatur eines Heizelements für einen elektrisch beheizbaren Katalysator,
- Figur 3: ein schematisches Ablaufdiagramm für Verfahren zum Ermitteln einer Heiztemperatur eines Heizelements für einen elektrisch beheizbaren Katalysator.

Elemente gleicher Konstruktion oder Funktion sind figurenübergreifend mit denselben Bezugszeichen gekennzeichnet.

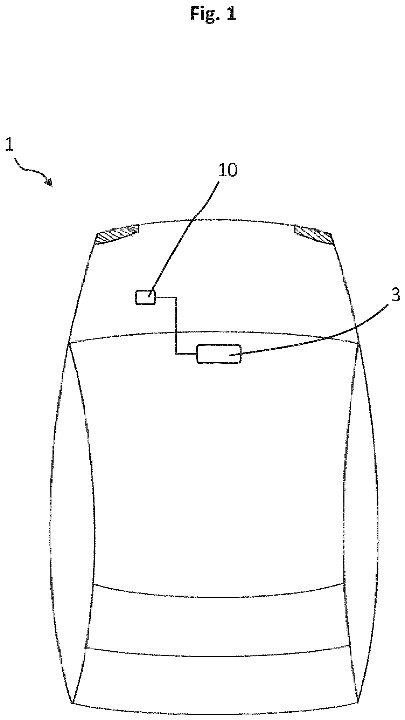

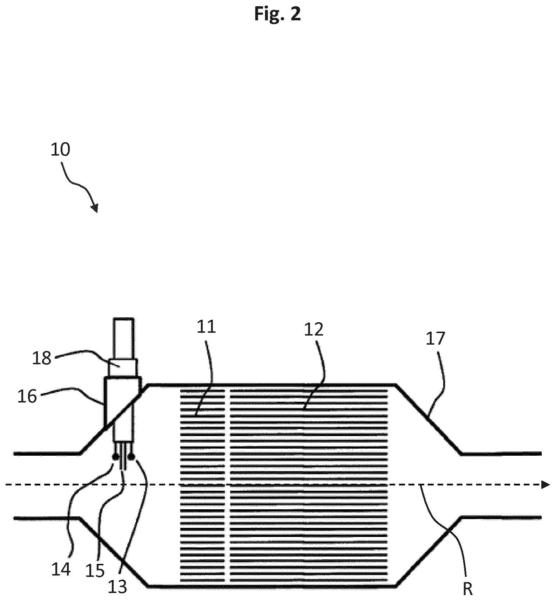

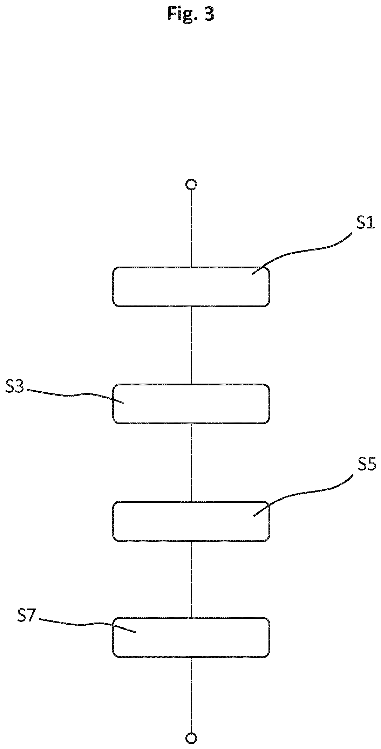

Figur 1 illustriert in einer schematischen Aufsicht ein Ausführungsbeispiel eines Kraftfahrzeugs 1, welches eine Vorrichtung 10 und eine Steuereinheit 3 umfasst, die signaltechnisch miteinander gekoppelt sind. Wie anhand der nachfolgenden Figuren 2 und 3 erläutert wird, ermöglicht die Vorrichtung 10 ein zuverlässiges Ermitteln einer Heiztemperatur eines Heizelements 11 für einen elektrisch beheizbaren Katalysator 12 und trägt dazu bei, Schadstoffemissionen während eines Betriebs des Kraftfahrzeugs 1 gering zu halten.

Gemäß dem in Figur 2 schematisch illustrierten Ausführungsbeispiel weist die Vorrichtung 10 das Heizelement 11 und den Katalysator 12 auf, die innerhalb eines Katalysatorgehäuses 17 angeordnet sind. Die Vorrichtung 10 umfasst ferner einen ersten Temperatursensor 13 und einen zweiten Temperatursensor 14, die innerhalb des Katalysatorgehäuses 17 angeordnet sind, wobei der erste Temperatursensor 13 bezogen auf eine Abgasströmungsrichtung R innerhalb des Katalysatorgehäuses 17 näher an dem Heizelement 11 angeordnet ist als der zweite Temperatursensor 14.

Mittels der Vorrichtung 10 ist ein Katalysatorsystem realisierbar, welches zu einem schadstoffarmen Betrieb des Kraftfahrzeugs 1 beitragen kann. Das Heizelement 11 sowie der Katalysator 12 sind zum Beispiel wabenförmig ausgebildet und gegebenenfalls so innerhalb des Katalysatorgehäuses 17 verbaut, dass der Katalysator 12 das Heizelement 11 stützt. Das Katalysatorgehäuse 17 weist eine Sensorschnittstelle 16 auf, die beispielsweise einen Gewindeadapter aufweist, in den eine Sensorbaugruppe 18 eingeschraubt werden kann, welche den ersten und zweiten Temperatursensor 13 und 14 umfasst.

Gemäß einer bevorzugten Ausführungsform weist die Vorrichtung 10 eine Abschirmung 15 auf, welche in Bezug auf die Wärmestrahlung des Heizelements 11 einen Schatten für den zweite Temperatursensor 14 ausbildet, sodass mittels des zweiten Temperatursensors 14 eine referenzierende Umgebungstemperatur des in dem Katalysatorgehäuses 17 befindlichen Gases messbar ist.

Die Abschirmung 15 ist bezogen auf die Abgasströmungsrichtung R zwischen den beiden Temperatursensoren 13 und 14 angeordnet und zum Beispiel in Form zweier Bleche ausgeführt. Die beiden Temperatursensorelemente 13 und 14 sind somit durch die Abschirmung 15 getrennt. Es ist vorteilhaft, wenn die Abschirmung 15 auch einen Teil der Sensorbaugruppe 18 realisiert, sodass auf besonders einfache und platzsparende Weise ein zuverlässiges Ermitteln der Heiztemperatur des Heizelements 11 möglich ist. Zudem trägt eine kompakte, integrale Sensorbaugruppe 18 zu einer einfachen Montage und einer aufwandsarmen Wartungsmöglichkeit der zugehörigen Komponenten bei. Außerdem kann die Sensorbaugruppe 18 an ihrem dem Katalysatorgehäuse 17 abgewandten Ende mittels eines elektronisches Moduls mit einer CAN-Schnittstelle koppelbar sein, sodass eine Signalübertragung zwischen der Steuereinheit 3 des Kraftfahrzeugs 1 und der Sensorbaugruppe 18 einrichtbar ist.

Der erste Temperatursensor 13 ist dem Heizelement 1 zugewandt und nimmt die Wärmestrahlung des Heizelementes 1 auf. Der zweite Temperatursensor 14 realisiert ein Referenzsensorelement, das zum Beispiel durch geeignet geformte Abschirmbleche der Abschirmung 15 von der Wärmestrahlung des Heizelements 11 abgeschirmt ist. Auf diese Weise kann sichergestellt werden, dass der zweite Temperatursensor 14 im Wesentlichen die Temperatur des umgebenden Abgases erfasst.

Der Katalysator 12 ist zum Beispiel als Metallträgerkatalysator ausgebildet. Das Heizelement 11 ist beispielsweise wie ein kurzer Abschnitt eines solchen Metallträgerkatalysators aufgebaut und kann daher zweckmäßig zusammen mit dem Katalysator 12 in dem Katalysatorgehäuse 17 verbaut sein, sodass das Heizelement 11 vom Katalysator 12 abgestützt werden kann.

Die beiden Temperatursensoren 13 und 14 können anstelle in einer gemeinsamen Sensorbaugruppe 18 in der Aufnahme 16 auch als zwei separate Sensoren verbaut innerhalb des Katalysatorgehäuses 17 verbaut sein. Je nach Einbauort kann dann auch eine Abschirmung 15 gegen die Wärmestrahlung des Heizelements 11 entfallen, sofern die Temperatursensoren 13, 14 einen ausreichend großen Abstand zueinander haben, dass ein zuverlässiges Ermitteln der Heiztemperatur des Heizelements 11 möglich ist. Darüber hinaus ist es gegebenenfalls auch möglich, eine Abgastemperatur und basierend darauf eine Heiztemperatur des Heizelements 11 ausreichend genau über Modellrechnungen zu bestimmen, sodass der zweite Temperatursensor 14 als Referenzsensor entfallen kann.

Als Temperatursensoren 13, 14 können prinzipiell verfügbare Abgastemperatursensoren verwendet werden. Zum Beispiel weist der erste und/oder zweite Temperatursensor 13, 14 einen Sensor mit Thermistoren (NTC) oder Thermoelementen auf.

Mittels der beschriebenen Vorrichtung 10 kann eine Heiztemperatur des Heizelements 11 zuverlässig ermittelt werden, auch wenn keine Abgasströmung innerhalb des Katalysatorgehäuses 17 vorhanden ist. Somit kann das Heizelement 11 auch schon vor einem Motorstart eines zugehörigen Verbrennungsmotors betrieben werden, wobei das Risiko eines Überhitzens und Beschädigens des Heizelements 11 mittels Überwachung der Heiztemperatur reduziert ist. Auf diese Weise kann Zeit zum Verarbeiten von Schadstoffemissionen des Verbrennungsmotors gewonnen werden, indem der zum Schadstoffabbau vorgesehene Katalysator 12 gemäß der beschriebenen Vorrichtung 10 schneller auf eine nutzbringende Betriebstemperatur gebracht werden kann.

Ein Überwachen der Heiztemperatur des Heizelements 11 kann mittels eines Verfahrens zum Ermitteln der Heiztemperatur des Heizelements 11 für den elektrisch beheizbaren Katalysator 12 gemäß dem Ablaufdiagramm nach Figur 3 durchgeführt werden.

In einem Schritt S1 wird das Heizelement 11 aktiviert, sodass sich infolgedessen die Temperatur des Heizelements 11 erhöht. Dies führt zu einem Strahlungsungleichgewicht zwischen dem Heizelement 11 und dem ersten Temperatursensorelement 13 und zu einer Erhöhung der Temperatur an der Position des ersten Temperatursensors 13.

In einem Schritt S3 kann eine erste Temperatur mittels des ersten Temperatursensors 13 erfasst, ein entsprechendes erstes Temperaturmesssignal generiert und dieses für die weitere Verarbeitung bereitgestellt werden.

In einem Schritt S5 kann eine zweite Temperatur mittels des zweiten Temperatursensors 14 erfasst, ein entsprechendes zweites Temperaturmesssignal generiert und dieses für die weitere Verarbeitung bereitgestellt werden.

In Abhängigkeit von dem ersten und zweiten Temperaturmesssignal wird in einem Schritt S7 eine Temperaturänderung pro Zeiteinheit ermittelt werden, auf Basis derer unter Berücksichtigung der momentanen Temperatur an der Position des referenzierenden zweiten Temperatursensorelements 14 die momentane Temperatur des Heizelementes 11 berechnet wird.

Im Rahmen solcher Berechnungen können auch systemspezifische Informationen, wie empirisch ermittelte Kennfelder und/oder Modellrechnung, mit einbezogen werden, welche zum Beispiel Daten über thermische und geometrische Randbedingungen sowie die Strahlungseigenschaften in dem Katalysatorsystem umfassen. Aufgrund der Komplexität eines solchen Abgas- beziehungsweise Katalysatorsystems ist eine Kombination von kalibrierten Kennfeldern und Modellrechnung beim Ermitteln der Heiztemperatur des Heizelements 11 besonders vorteilhaft.

Mittels des beschriebenen Verfahrens ist eine Heiztemperatur des Heizelements 11 zuverlässig ermittelbar und es kann dazu beigetragen werden, Schadstoffemissionen während eines Betriebs des Kraftfahrzeugs 1 gering zu halten. Das Verfahren kann zum Beispiel mittels der Steuereinheit 3 des Kraftfahrzeugs 1 durchgeführt werden, welche zum Beispiel einen Datenspeicher und eine Recheneinheit zum Empfangen, Verarbeiten und Senden von Daten und Signalen umfasst.

Falls eine Vorheizphase des Heizelements 11 relativ lang ist in Bezug auf thermische Zeitkonstanten der eingesetzten Systemkomponenten, kann auch ein Gleichgewichtszustand der Temperatur innerhalb des Katalysatorgehäuses 17 eintreten. Die Temperatur des ersten Temperatursensors 13 würde sich dabei asymptotisch dem Strahlungs- und Wärmeleitungsgleichgewicht annähern, welches durch das erste Temperatursensorelement 13, dem Heizelement 11, der Wärmeableitung durch die Sensorbaugruppe 18 und der Gastemperatur des innerhalb des Katalysatorgehäuses 17 befindlichen Gases gebildet wird.

Die Temperaturänderung pro Zeiteinheit an dem ersten Temperatursensor 13 würde dann zwar gegen null konvergieren, allerdings würde dies nicht bedeuten, dass die Heiztemperatur des Heizelements 11 genau der Temperatur des ersten Temperatursensors 13 wertmäßig entspricht, da das Strahlungsgleichgewicht nicht nur zwischen Heizelement 11 und dem ersten Temperatursensorelement 13 gilt. Aufgrund der Kenntnis der lokalen Temperaturen und der Differenz der ersten und zweiten Temperaturen an den Positionen der beiden Temperatursensoren 13 und 14 ist aber zusammen mit einer systemspezifischen Kalibrierung der thermischen Parametern bis zu diesem Betriebspunkt eine sichere Begrenzung der Temperatur des Heizelements 11 möglich.

## Patentansprüche

1. Vorrichtung (10) zum Ermitteln einer Heiztemperatur eines Heizelements (11) für einen elektrisch beheizbaren Katalysator (12), umfassend:
- das Heizelement (11) und den Katalysator (12), die innerhalb eines Katalysatorgehäuses (17) angeordnet sind, und
- einen ersten Temperatursensor (13) und einen zweiten Temperatursensor (14), **dadurch gekennzeichnet, dass** die beiden Temperatursensoren bezogen auf eine Abgasströmungsrichtung (R) innerhalb des Katalysatorgehäuses (17) stromaufwärts vor dem Heizelement (11) angeordnet sind, wobei der erste Temperatursensor (13) bezogen auf die Abgasströmungsrichtung (R) innerhalb des Katalysatorgehäuses (17) näher an dem Heizelement (11) angeordnet ist als der zweite Temperatursensor (14).

2. Vorrichtung (10) nach Anspruch 1, umfassend:
eine Abschirmung (15), die innerhalb des Katalysatorgehäuses (17) bezogen auf die Abgasströmungsrichtung (R) zwischen dem ersten und dem zweite Temperatursensor (13, 14) angeordnet ist, sodass der zweite Temperatursensor (14) von einer Wärmestrahlung des Heizelements (11) abgeschirmt ist.

3. Vorrichtung (10) nach Anspruch 2, bei der die Abschirmung (15) zwei Bleche aufweist.

4. Vorrichtung (10) nach einem der Ansprüche 1 bis 3, umfassend:
eine Sensorschnittstelle (16), die an dem Katalysatorgehäuse (17) angeordnet und zur mechanischen Aufnahme des ersten und/oder des zweiten Temperatursensors (13, 14) ausgebildet ist.

5. Vorrichtung (10) nach einem der Ansprüche 1 bis 4, bei der der erste und der zweite Temperatursensor (13, 14) als eine gemeinsame Sensorbaugruppe (18) ausgebildet sind.

6. Vorrichtung (10) nach Anspruch 2 oder einem der Ansprüche 3 bis 5, sofern dieser auf Anspruch 2 rückbezogen ist, bei der der erste und der zweite Temperatursensor (13, 14) und die Abschirmung (15) als eine gemeinsame Sensorbaugruppe (18) ausgebildet sind und bezogen auf die Abgasströmungsrichtung (R) hintereinander angeordnet sind.

7. Vorrichtung (10) nach einem der Ansprüche 1 bis 6, bei der der erste und/oder der zweite Temperatursensor (13, 14) jeweils als Abgastemperatursensor ausgebildet ist und einen Thermistor und/oder ein Thermoelement aufweist.

8. Kraftfahrzeug (1), umfassend:
eine Vorrichtung (10) zum Ermitteln einer Heiztemperatur eines Heizelements (11) für einen elektrisch beheizbaren Katalysator (12) nach einem der Ansprüche 1 bis 7, die in oder an dem Kraftfahrzeug (1) angeordnet ist.

9. Verfahren zum Ermitteln einer Heiztemperatur eines Heizelements (11) für einen elektrisch beheizbaren Katalysator (12) mittels einer Vorrichtung (10) nach einem der Ansprüche 1 bis 7, umfassend:
- Ansteuern des Heizelements (11) zum Beheizen des Katalysators (12),
- Empfangen eines ersten Temperaturmesssignals mittels des ersten Temperatursensors (13), das repräsentativ für eine erste Temperatur innerhalb des Katalysatorgehäuses (17) ist,
- Empfangen eines zweiten Temperaturmesssignals mittels des zweiten Temperatursensors (14), das repräsentativ für eine zweite Temperatur innerhalb des Katalysatorgehäuses (17) ist,
- Ermitteln eines zeitlichen Temperaturgradienten in Abhängigkeit von dem ersten und zweiten Temperaturmesssignals, und
- Ermitteln einer Heiztemperatur des Heizelements (11) in Abhängigkeit von dem ermittelten zeitlichen Temperaturgradienten.

10. Verfahren nach Anspruch 9, bei dem das Ermitteln einer Heiztemperatur des Heizelements (11) umfasst:
Ermitteln der Heiztemperatur des Heizelements (11) in Abhängigkeit von bereitgestellten Daten, die systemspezifische Informationen über die Vorrichtung (10) umfassen.

## Claims

1. Apparatus (10) for ascertaining a heating temperature of a heating element (11) for an electrically heatable catalytic converter (12), comprising:
- the heating element (11) and the catalytic converter (12), which are arranged within a catalytic converter housing (17), and
- a first temperature sensor (13) and a second temperature sensor (14), **characterized in that** the two temperature sensors are arranged upstream in front of the heating element (11) with respect to an exhaust gas flow direction (R) within the catalytic converter housing (17), wherein the first temperature sensor (13) is arranged closer to the heating element (11) than the second temperature sensor (14) with respect to the exhaust gas flow direction (R) within the catalytic converter housing (17).

2. Apparatus (10) according to Claim 1, comprising:
a shielding (15) which is arranged between the first and the second temperature sensor (13, 14) with respect to the exhaust gas flow direction (R) within the catalytic converter housing (17), so that the second temperature sensor (14) is shielded from thermal radiation of the heating element (11).

3. Apparatus (10) according to Claim 2, in which the shielding (15) has two metal sheets.

4. Apparatus (10) according to one of Claims 1 to 3, comprising:
a sensor interface (16) which is arranged on the catalytic converter housing (17) and is designed for mechanically receiving the first and/or the second temperature sensor (13, 14).

5. Apparatus (10) according to one of Claims 1 to 4, in which the first and the second temperature sensor (13, 14) are designed as a common sensor assembly (18).

6. Apparatus (10) according to Claim 2 or one of Claims 3 to 5 if they refer back to Claim 2, in which the first and the second temperature sensor (13, 14) and the shielding (15) are designed as a common sensor assembly (18) and are arranged one behind the other with respect to the exhaust gas flow direction (R).

7. Apparatus (10) according to one of Claims 1 to 6, in which the first and/or the second temperature sensor (13, 14) are/is each designed as an exhaust gas temperature sensor and have/has a thermistor and/or a thermocouple.

8. Motor vehicle (1), comprising:
an apparatus (10) for ascertaining a heating temperature of a heating element (11) for an electrically heatable catalytic converter (12) according to one of Claims 1 to 7, which apparatus is arranged in or on the motor vehicle (1) .

9. Method for ascertaining a heating temperature of a heating element (11) for an electrically heatable catalytic converter (12) by means of an apparatus (10) according to one of Claims 1 to 7, comprising:
- actuating the heating element (11) for heating the catalytic converter (12),
- receiving a first temperature measurement signal by means of the first temperature sensor (13), which first temperature measurement signal is representative of a first temperature within the catalytic converter housing (17),
- receiving a second temperature measurement signal by means of the second temperature sensor (14), which second temperature measurement signal is representative of a second temperature within the catalytic converter housing (17),
- ascertaining a temperature gradient over time depending on the first and the second temperature measurement signal, and
- ascertaining a heating temperature of the heating element (11) depending on the ascertained temperature gradient over time.

10. Method according to Claim 9, in which ascertaining a heating temperature of the heating element (11) comprises:
ascertaining the heating temperature of the heating element (11) depending on provided data which comprise system-specific information about the apparatus (10).

## Revendications

1. Dispositif (10) permettant d'établir une température de chauffage d'un élément chauffant (11) destiné à un catalyseur à chauffage électrique (12), comprenant :
- l'élément chauffant (11) et le catalyseur (12) qui sont disposés à l'intérieur d'un boîtier de catalyseur (17), et
- un premier capteur de température (13) et un deuxième capteur de température (14),
**caractérisé en ce que** les deux capteurs de température sont disposés à l'intérieur du boîtier de catalyseur (17) en amont de l'élément chauffant (11) par rapport à une direction d'écoulement de gaz d'échappement (R), le premier capteur de température (13) étant disposé à l'intérieur du boîtier de catalyseur (17) plus près de l'élément chauffant (11) que le deuxième capteur de température (14), par rapport à la direction d'écoulement de gaz d'échappement (R).

2. Dispositif (10) selon la revendication 1, comprenant :
un blindage (15) qui est disposé à l'intérieur du boîtier de catalyseur (17) entre le premier et le deuxième capteur de température (13, 14), par rapport à la direction d'écoulement de gaz d'échappement (R), de sorte que le deuxième capteur de température (14) est protégé d'un rayonnement thermique de l'élément chauffant (11).

3. Dispositif (10) selon la revendication 2, dans lequel le blindage (15) présente deux tôles.

4. Dispositif (10) selon l'une quelconque des revendications 1 à 3, comprenant :
une interface de capteur (16) qui est disposée sur le boîtier de catalyseur (17) et est réalisée pour la réception mécanique du premier et/ou du deuxième capteur de température (13, 14).

5. Dispositif (10) selon l'une quelconque des revendications 1 à 4, dans lequel le premier et le deuxième capteur de température (13, 14) sont réalisés sous la forme d'un ensemble de capteurs commun (18).

6. Dispositif (10) selon la revendication 2 ou l'une quelconque des revendications 3 à 5 dans la mesure où elle dépend de la revendication 2, dans lequel le premier et le deuxième capteur de température (13, 14) et le blindage (15) sont réalisés sous la forme d'un ensemble de capteurs commun (18) et sont disposés l'un après l'autre par rapport à la direction d'écoulement de gaz d'échappement (R).

7. Dispositif (10) selon l'une quelconque des revendications 1 à 6, dans lequel le premier et/ou le deuxième capteur de température (13, 14) sont réalisés respectivement sous la forme d'un capteur de température de gaz d'échappement et présentent une thermistance et/ou un thermocouple.

8. Véhicule automobile (1), comprenant :
un dispositif (10) permettant d'établir une température de chauffage d'un élément chauffant (11) destiné à un catalyseur à chauffage électrique (12) selon l'une quelconque des revendications 1 à 7 qui est disposé dans ou sur le véhicule automobile (1).

9. Procédé permettant d'établir une température de chauffage d'un élément chauffant (11) destiné à un catalyseur à chauffage électrique (12) au moyen d'un dispositif (10) selon l'une quelconque des revendications 1 à 7, comprenant les étapes consistant à :
- piloter l'élément chauffant (11) pour chauffer le catalyseur (12),
- recevoir un premier signal de mesure de température au moyen du premier capteur de température (13) qui représente une première température à l'intérieur du boîtier de catalyseur (17),
- recevoir un deuxième signal de mesure de température au moyen du deuxième capteur de température (14) qui représente une deuxième température à l'intérieur du boîtier de catalyseur (17),
- établir un gradient de température dans le temps en fonction du premier et du deuxième signal de mesure de température, et
- établir une température de chauffage de l'élément chauffant (11) en fonction du gradient de température dans le temps établi.

10. Procédé selon la revendication 9, dans lequel l'établissement d'une température de chauffage de l'élément chauffant (11) comprend :
l'établissement de la température de chauffage de l'élément chauffant (11) en fonction de données fournies qui comprennent des informations spécifiques à un système concernant le dispositif (10).
